(19) Europäisches Patentamt / European Patent Office / Office européen des brevets

(11) **EP 2 768 395 B1**

(12) **EUROPEAN PATENT SPECIFICATION**

(45) Date of publication and mention
of the grant of the patent:
**05.12.2018 Bulletin 2018/49**

(21) Application number: **12842317.5**

(22) Date of filing: **16.10.2012**

(51) Int Cl.:
*G06T 7/00* (2017.01)         *G06T 7/11* (2017.01)
*G06T 7/136* (2017.01)        *G06T 7/143* (2017.01)
*G06T 7/187* (2017.01)

(86) International application number:
**PCT/US2012/060394**

(87) International publication number:
**WO 2013/059177 (25.04.2013 Gazette 2013/17)**

(54) **COMPUTER-AIDED BONE SCAN ASSESSMENT WITH AUTOMATED LESION DETECTION AND QUANTITATIVE ASSESSMENT OF BONE DISEASE BURDEN CHANGES**

COMPUTERGESTÜTZTE KNOCHENSZINTIGRAFIEBEURTEILUNG MIT AUTOMATISCHER LÄSIONSDETEKTION UND QUANTITATIVER BESTIMMUNG VON BELASTUNGSVERÄNDERUNGEN INFOLGE VON KNOCHENERKRANKUNGEN

ÉVALUATION DE SCANNER OSSEUX ASSISTÉE PAR ORDINATEUR, PERMETTANT LA DÉTECTION AUTOMATISÉE DE LÉSIONS ET L'ÉVALUATION QUANTITATIVE DES MODIFICATIONS DE LA CHARGE DE MORBIDITÉ DE MALADIE OSSEUSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.10.2011 US 201161548498 P**

(43) Date of publication of application:
**27.08.2014 Bulletin 2014/35**

(73) Proprietor: **MedQIA**
**Los Angeles, CA 90024 (US)**

(72) Inventor: **BROWN, Matthew, Sherman**
**Marina Del Ray, CA 90292 (US)**

(74) Representative: **Davies, Philip**
**Haseltine Lake LLP**
**Redcliff Quay**
**120 Redcliff Street**
**Bristol**
**BS1 6HU (GB)**

(56) References cited:
JP-A- 2002 531 198    JP-A- 2004 508 118
JP-A- 2006 512 938    JP-A- 2009 515 594

- MATTIAS OHLSSON ET AL: "Automated decision support for bone scintigraphy", COMPUTER-BASED MEDICAL SYSTEMS, 2009. CBMS 2009. 22ND IEEE INTERNATIONAL SYMPOSIUM ON, IEEE, PISCATAWAY, NJ, USA, 2 August 2009 (2009-08-02), pages 1-6, XP031530426, ISBN: 978-1-4244-4879-1
- ERDI Y E ET AL: "A system for the quantitative analysis of bone metastases by image segmentation", NUCLEAR SCIENCE SYMPOSIUM, 1996. CONFERENCE RECORD., 1996 IEEE ANAHEIM, CA, USA 2-9 NOV. 1996, NEW YORK, NY, USA,IEEE, US, 2 November 1996 (1996-11-02), page 1831, XP032392518, DOI: 10.1109/NSSMIC.1996.587985 ISBN: 978-0-7803-3534-9

**Description**

**BACKGROUND OF THE INVENTION**

Field Of The Invention

The invention relates to the field of medical imaging. More particularly, the present invention relates to bone scans, bone lesions, and bone disease assessment.

Discussion of the Related Art

Bone tumors may originate in bone or they may originate in other sites and spread (metastasize) to the skeleton. For example, secondary tumors in the bone frequently result from metastasized prostate cancer. Images from bone scans reveal lesions associated with primary bone or metastatic cancer and their interpretations are used extensively in the diagnosis and treatment of the disease.

A few computer-aided lesion detection systems have been reported for bone scans. These techniques have included semi-automated image segmentation programs that are frequently too time-consuming for use in a clinical setting such as those of Erdi et al. and Yin et al. The semi-automated approach described by Erdi et al. requires that the user insert a seed point in each metastatic region on the image, a process that is nontrivial, considering that patients with bone metastases often have multiple disease sites.[1]

[1] Erdi YE, Humm JL, Imbriaco M, Yeung H, Larson SM, Quantitative bone metastases analysis based on image segmentation. J Nucl Med 1997;38:1401-1406. See also Yin TK, Chiu NT, A computer-aided diagnosis for locating abnormalities in bone scintigraphy by a fuzzy system with a three-step minimization approach. IEEE Trans Med Imaging 2004; 23:639-654.

More recently, a fully automated method developed by Sadik et al. combines bone lesion detection by image segmentation with scan evaluation through an artificial neural network to classify patients by their probability of bone metastasis, resulting in a binary grading of scans as having probable "bone metastases" or probable "no bone metastases."[2]

[2] See Sadik M, Jakobsson D, Olofsson F, Ohlsson M, Suurkula M, Edenbrandt L., A new computer-based decision-support system for the interpretation of bone scans. Nucl Med Commun 2006; 27:417-423.

Although this system showed a good correlation with physician-determined estimates of the probability of bone metastases, the system does not provide a quantitative metric for the comparison of consecutive scans nor a means of assessing treatment outcomes.

Importantly, none of the reported outcomes have been studied prospectively in relation to true measures of patient benefit such as reduction in skeletal-related events or prolongation of life, measures that form the basis for regulatory approvals.

Conversely, systems for image enhancement have been developed to normalize images from consecutive scans for ease of physician interpretation but have not attempted lesion identification.[3]

[3] Jeong CB, Kim KG, Kim TS, Kim SK, Comparison of image enhancement methods for the effective diagnosis in successive whole-body bone scans. J Digit Imaging 2011; 24:424-436.

Quantitative assessment by bone scintigraphy of metastatic bone disease burden in prostate cancer has been previously performed, including the development of metrics such as bone scan index (BSI) and percentage of the positive area on a bone scan (%PABS).[4]

[4] Imbriaco M, Larson SM, Yeung HW, Mawlawi OR, Erdi Y, Venkatraman ES, et al., A new parameter for measuring metastatic bone involvement by prostate cancer: the Bone Scan Index. Clin Cancer Res 1998; 4: 1765-1772. See also Noguchi M, Kikuchi H, Ishibashi M, Noda S., Percentage of the positive area of bone metastasis is an independent predictor of disease death in advanced prostate cancer. Br J Cancer 2003; 88:195-201.

Both BSI and %PABS have undergone initial evaluation as prognostic factors for patients with prostate cancer, but the methods used to calculate these metrics have been time-consuming, requiring extensive manual annotation of bone scans. Evaluation of %PABS and BSI as feasible metrics for the assessment of treatment response is ongoing.[5]

[5] Yahara J, Noguchi M, Noda S., Quantitative evaluation of bone metastases in patients with advanced prostate cancer during systemic treatment. BJU Int 2003; 92:379-384. See also Morris MJ, Jia X, Larson SM, Kelly A, Mezheritzky I, Stephenson RD, et al., Post-treatment serial bone scan index (BSI) as an outcome measure predicting survival. Presented at: Genitourinary Cancers Symposium 2008;

While computer-aided detection (CAD) systems have been previously applied to bone scan analysis, they lack features in embodiments of the present invention. For example, such known systems have typically addressed lesion detection only on a single scan from a patient, without comparing successive scans.

Ohlsson et al: "Automated decision support for bone scintigraphy", Computer-Based Medical Systems, 2009.

CBHS 2009 describes an attempt to develop a completely automated decision support system for whole-body bone scans using image analysis and artificial neural networks. The decision support system first detects and classifies individual hotspots as being metastatic or not. A second prediction model then classifies the scan regarding metastatic disease on a patient level.

## SUMMARY OF THE INVENTION

A system and method that provides bone scan assessment with automated lesion detection and quantitative assessment of bone disease burden changes.

In various embodiments, the use of bone scans to monitor treatment effects utilizes accurate segmentation and quantification of lesions within a single scan, as well as the comparison of lesion measurements between consecutive scans. Embodiments provide an automated system that accurately and reproducibly segments and quantifies bone lesions to aid physicians in intrapatient and interpatient comparison.

The inventors have analytical validation of a bone scan computer-aided treatment assessment system that combines both automated lesion segmentation, including image normalization, and quantitative assessment of disease burden. Successful differentiation between untreated and treated patient groups was used to evaluate system capability for assessing treatment effects.

Validation shows the system is capable of reducing the variability of hand-annotated bone scan analysis, so that objective, reproducible, and quantitative measurements are consistently obtained which lays a foundation for prospective correlation of individual measures with other clinical and laboratory outcome data.

Validation shows the system is capable of accurate automated bone scan lesion segmentation (detection of lesion pixels) and capable of providing quantitative measures of lesion burden that may then be used to assess disease status changes in treated and untreated patients.

In various embodiments, the invention may be implemented as a computer program (software). The program may be executed by an image acquisition device, a reading workstation, a server, and/or other appropriate devices. Processing on a server may facilitate interfacing with a centralized imaging archive and storing bone scan analysis reports in a centralized database. The system may also be accessed remotely (e.g., via the Internet).

Embodiments of the invention may be described with reference to equations, algorithms, and/or flowchart illustrations of methods. These methods may be implemented using sets of instructions either separately, or as a component of a system. As such, each equation, algorithm, operation of a flowchart, and/or combinations thereof, may be implemented in various ways, such as hardware, firmware, and/or software. Computer program instructions may be loaded on to a computer, such that the computer program instructions provide a way to implement functions specified by the equations, algorithms, and/or flowcharts.

## BRIEF DESCRIPTION OF THE DRAWINGS

The present invention is described with reference to the accompanying figures. These figures, incorporated herein and forming part of the specification, illustrate embodiments of the present invention and, together with the description, further serve to explain the principles of the invention and to enable a person skilled in the relevant art to make and use the invention.

Figure 1 shows a computer-aided quantitative bone scan assessment system in accordance with the present invention.

Figure 2 shows an overview of a computer-aided bone scan assessment process in accordance with the present invention.

Figure 3 shows a more detailed overview of the assessment process of Figure 2.

Figure 4 shows a method of calculating a normal bone normalizing value RIMEDIAN from reference images in accordance with the process of Figure 2.

Figure 5 shows a methodology including use of an expert and identification of lesion indicating intensity thresholds.

Figure 6 shows a second methodology including use of an expert and identification of lesion indicating intensity thresholds in accordance with the process of Figure 2.

Figure 7 shows identification of true-positive pixels indicating a lesion in accordance with the process of Figure 2.

Figure 8 shows evaluation of anatomically specific metrics in accordance with the process of Figure 2.

Figure 9 shows evaluation of summary metrics for all anatomic regions in accordance with the process of Figure 2.

Figure 10 shows an exemplary assessment system operating scenario in accordance with the process of Figure 2.

## DETAILED DESCRIPTION OF THE PREFERRED EMBODIMENTS

The disclosure provided in the following pages describes examples of some embodiments of the invention. The designs, figures, and description are non-limiting examples of the embodiments they disclose. For example, other embodiments of the disclosed device and/or method may or may not include the features described herein. Moreover, disclosed advantages and benefits may apply to only certain embodiments of the invention and should not be used to limit the disclosed invention.

As used herein, the term "coupled" includes direct and indirect connections. Moreover, where first and second devices are coupled, intervening devices including active devices may be located therebetween.

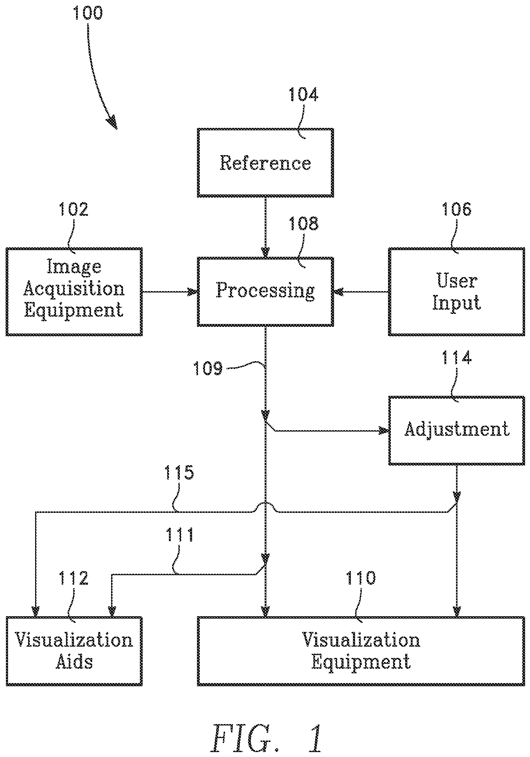

FIG. 1 shows a computer-aided quantitative bone scan assessment system in accordance with the present invention 100. A processing unit 108 receives image data from image acquisition equipment 102. Data from these and other images, processed or not, is available to the processor via a reference unit 104 for storing selected data. In various embodiments, processor inputs include user inputs and settings 106 such as those resulting from expert evaluation of any of patient condition, desired image quality, and equipment capability. In some embodiments, processing and/or user input is carried out, at least in part, in the image acquisition equipment.

Bone scan imaging equipment 102 includes any suitable bone imaging equipment commonly used in nuclear medicine. For example, in various embodiments imaging equipment utilizes radioisotopes and radiation sensitive cameras such as those used in scintigraphic imaging systems and devices. In particular, scintigraphy is a technique that uses radioisotopes in conjunction with a gamma camera for indicating tissues that accumulate the radioisotope. Here, gamma camera pixel intensity shows accumulated radioisotope and localized areas of high metabolic activity in bone, events indicative of a bone lesion.

Reference equipment 104 includes any suitable means for storing data and/or information about data. Typical reference units include digital data storage devices including semiconductor memory, moving media memory such as hard disc drives, optical memory, and like devices and equipment known in the computing field.

User input devices 106 include any suitable means for conveying a user's inputs to the processor 108. In various embodiments, any of a keyboard, mouse, touchscreen, and associated input processing means such as a personal computer are used.

In some embodiments, an adjustment unit or station 114 provides for enhancement and quality control of selected processor output data 109. While this function may be automated, using pattern recognition techniques for example, in various embodiments an expert such as a nuclear medicine radiologist with expertise in nuclear medicine enhances and/or corrects bone scan images/data. For example, false lesion indications resulting from pre-existing conditions such as joint disease and bone fracture are identified and resolved accordingly.

Bone scan processing 108 includes processing equipment, methods, and processes. Suitable equipment includes any suitable information processing equipment known in the computing field. In particular, digital processing equipment including any one or more microprocessors, personal computers, workstations, massively parallel computing infrastructure, and supercomputers provide, in various embodiments, suitable processing functionality.

Visualization equipment 110 includes any suitable equipment known in the computing field including displays and printers. Displays include CRT, LED, Plasma, Fluorescent, and electroluminescent display devices. Printers include devices fixing information in tangible media such as laser printers and devices with similar uses.

Graphic visualization aids 112 provide for visualizing physical structures and in particular for visualizing lesion indicating bone scan data. Visualization aids include the special case of compound images in the form of image sets presenting a foundational or base image that is overlain by an upper image. Translucent and/or transparent qualities of the upper image provide for simultaneous viewing of at least portions of the base image in conjunction with at least portions of the upper image.

As seen in the figure, a processor output 109 conveys information to one or more of visualization equipment 110, graphic visualization aids 112, and an adjustment unit 114. The visualization equipment and aids provide for visualization, in various embodiments, of one or both of unadjusted processor output 111 and adjusted processor output 115.

Figures below describe in more detail methods and processes carried out in the computer-aided quantitative bone scan assessment system 100 including methods and processes carried out in processing 108.

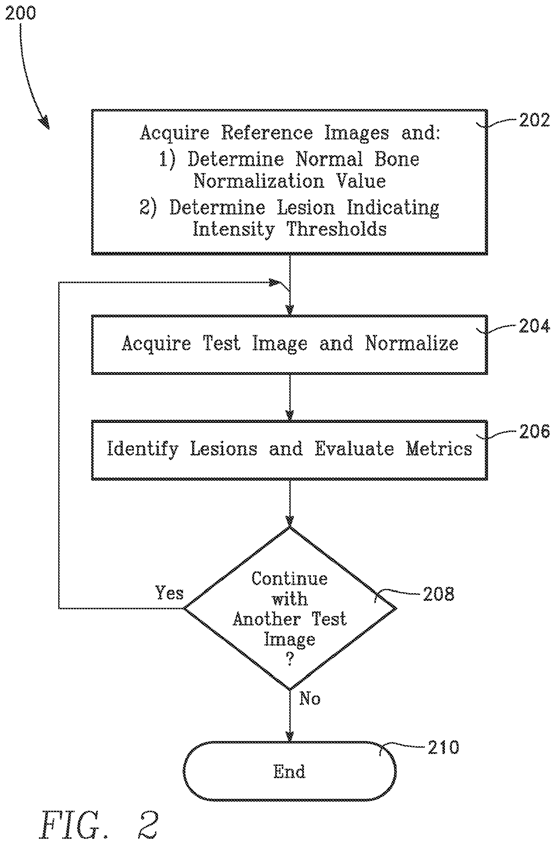

FIG. 2 shows an overview of a computer-aided bone scan assessment process in accordance with the present invention 200. An initializing step 202 enables a norinalized test image step 204 and an evaluation of the test image including identifying lesions and generating quantitative metrics 206. As shown, subsequent test image evaluations do not typically require that the initialization step be repeated.

In the initializing step 202, one or more reference images are acquired. Typically, plural reference images are acquired from plural patients with positive indications of indication of primary or metastatic cancer to the bone. Selecting a group of reference images from a varied patient population tends to enhance the likelihood that reference norms will indicate, rather than fail to indicate, bone lesions in later compared test images.

Initialization step 202 includes determining a normalizing factor indicative of normal bone intensity. Intensity here refers to visible light intensity such as the intensity of a pixel in an image acquired by a gamma camera. Initialization also includes use of the reference images to determine intensity thresholds that are indicative of bone lesions. In various embodiments, the normalizing factor and intensity thresholds determined from the initialization step are stored for future use. In some embodiments, the values are stored in the reference unit 104.

Having completed the initialization step, normalizing 204 and evaluating 206 steps follow. In the normalizing step, a test image (e.g., data representing an image) is acquired by the image acquisition equipment 102 or otherwise and the image is normalized as further described below.

Normalization 204 prepares the test image for evaluation including lesion identification and metric generation 206. In various embodiments, normalization reduces the effects of variances in intensity due to differences in body habitus, radiotracer dosing levels and/or time between tracer administration and scan acquisition in order to improve reproducibility of lesion segmentation and quantitation. After intensity normalization, the pixel intensities of normal bone are consistent between time points enabling reproducible lesion segmentation and quantitative assessment in serial patient images.

The metrics from the evaluating step 206 provide a quantitative measure of lesion burden. As shown in decision step 208, additional test images may be normalized and evaluated without repeating the initialization step 202. After all test images are processed, an end step 210 is reached.

In an embodiment, multiple test images are made and processed for one particular patient. Each test image provides a quantitative measure of the patient's lesion burden such that test images made at different times provide patient health monitoring including whether the disease is responding to treatment, stable, or progressing.

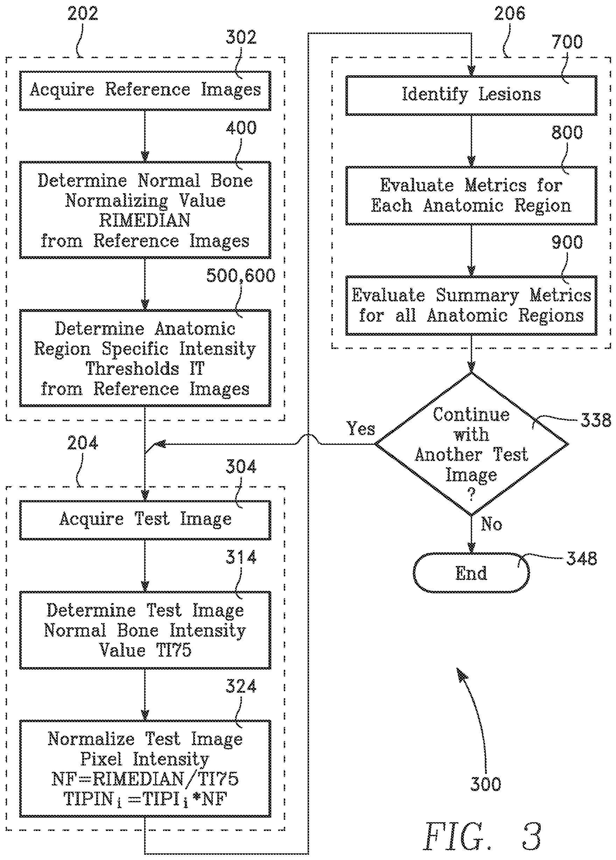

FIG. 3 shows a more detailed overview of an embodiment of the computer-aided bone scan assessment of the present invention 300. As before, an initializing step 202 is followed by a normalizing step 204, and an evaluation step 206.

The initializing step 202 includes acquisition of reference image(s) 302, use of the reference images to determine a normalizing value ("RIMEDIAN") for normal bone 400, and use of the reference images to determine anatomic region specific intensity thresholds ("$IT_r$") 500, 600. As mentioned above, it is typical for plural reference images to be acquired 302 from plural bone cancer patients.

The normalizing step 204 includes acquisition of a test image 304, determination of a test image normal bone intensity value ("TI75") 314, and normalizing test image pixel intensity 324.

From test image normal bone intensity TI75 and the reference image normalizing value RIMEDIAN, a normalizing factor NF is calculated as shown in Equation 1.

$$\text{Equation 1, Normalizing Factor:} \qquad NF = (RIMEDIAN / TI75)$$

The normalizing factor NF is used to normalize the intensity of pixels in the test image. Where $TIPI_i$ is test image pixel intensity for a particular pixel and $TIPIN_i$ is the normalized test image pixel intensity for that pixel, test image pixels are normalized as shown in Equation 2.

$$\text{Equation 2:} \qquad TIPIN_i = TIPI_i \times NF$$

Following this normalization, normal bone intensities in the reference images correspond with normal bone intensities in the test image.

Normalization 204 prepares the test image for evaluation 206. The evaluation step includes indication of lesions 700, evaluation of anatomic region specific metrics 800, and evaluation of summary metrics for all anatomic regions 900, each of which is further described below.

The metrics provides a quantitative measure of lesion burden. As shown in decision step 338, additional test images may be normalized and evaluated without repeating the initialization step 202. After all test images are processed, an end step 348 is reached.

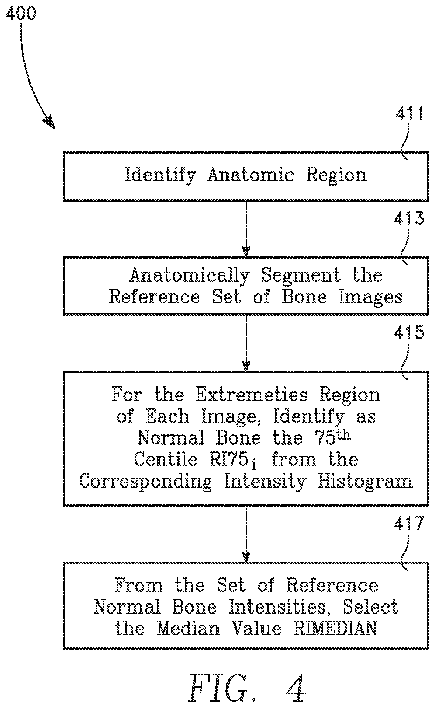

FIG. 4 shows a method of calculating a normal bone normalizing value RIMEDIAN from reference images 400. Anatomic regions are identified 411, the set of reference bone images are anatomically segmented 413, a normal bone intensity value is identified in each image 415, and a reference bone intensity value representative of all of the reference images is determined 417.

In step 411, anatomic regions are identified. These regions generally represent skeletal regions. In an embodiment, the anatomic segmentation identifies anatomic regions by comparison to an atlas image with the following anatomic labels: spine, ribs, head, extremities, and pelvis.

In step 413, the set of reference bone images are anatomically segmented. Segmentation here corresponds with the anatomic regions identified above.

In step 415, a normal bone intensity value is identified in each reference image. In various embodiments, a statistically valued intensity is selected in a particular region of each reference image to represent normal bone intensity. The statistical valuation used may be based on experience, evaluated based on a trial and error procedure or determined in another manner known to persons of ordinary skill in the art.

In an exemplary case based on the inventor's experience, normal bone intensity is indicated by the $75^{th}$ centile value $RI75_x$ ($1 \leq x \leq$ no. of regions) of the intensity histogram of a particular anatomical region. In an embodiment, normal bone intensity in a reference image is determined by the $75^{th}$ centile value RI75x selected from the extremities region intensity histogram.

In step 417, a reference bone intensity value representative of all of the reference images is determined. In various embodiments, this representative bone intensity value is the median value RIMEDIAN corresponding to the set of $75^{th}$ centile values RI75, mentioned above.

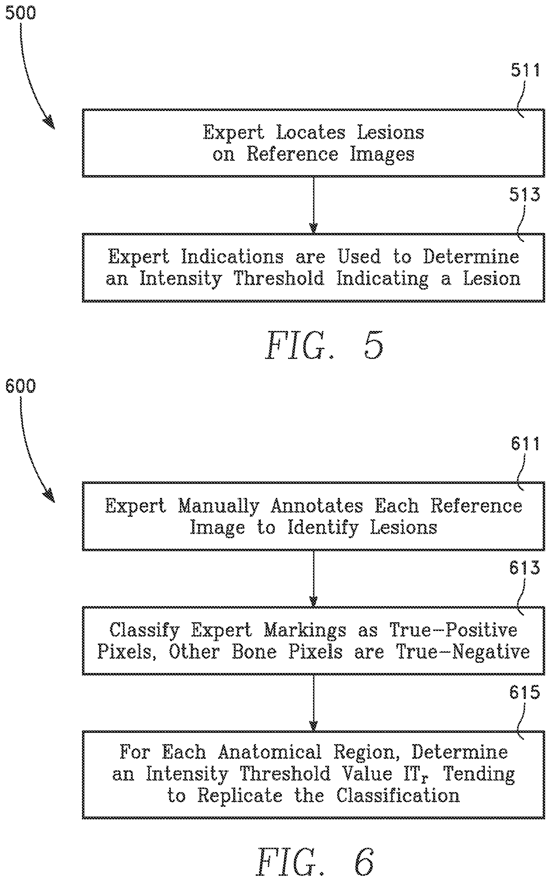

Figures 5 and 6 show methodologies for determining anatomically specific intensity thresholds from the reference images 500, 600. Figure 5 shows a methodology including use of an expert and identification of lesion indicating intensity thresholds 500. A first step 511 provides an expert such as an expert in reading nuclear medicine images and in particular bone scan images of patients with bone lesions. In this step, the expert locates lesions on the reference images. In a second step 513, the expert indications are evaluated. This evaluation determines the intensity threshold(s) that indicate a lesion.

Figure 6 shows a second methodology including use of an expert and identification of lesion indicating intensity thresholds 600. Steps include annotation 611, classification 613, and determining intensity threshold values $IT_r$.

Annotation 611 utilizes an expert such as the expert mentioned above. Here, the expert annotates each reference image to indicate lesions. Classification 613 classifies the expert markings to associate pixels with lesions. In an embodiment, a binary classifier system is used such that expert markings indicating lesions are classified as true-positive pixels and other bone pixels are classified as true-negative pixels.

Intensity threshold determination 615 determines, for each anatomical region, a single intensity threshold IT, tending to replicate the classification for all patients in the reference group.

For example, for each anatomical region an intensity threshold value is found that tends, for all patients in the group, to maximize the number of true positives (increased mean sensitivity) while minimizing the number of false positives (increased mean specificity).

In various embodiments, lesion segmentation via anatomic region-specific intensity thresholding is performed on a normalized image to detect lesions in each anatomic region by applying a specific threshold to the normalized image, then performing connected component filtering.

And, in various embodiments, a receiver operating characteristic curve (ROC or ROC Curve) is used to evaluate the performance of the above binary classifier system. The curve/criteria is created by plotting the fraction of true positives out of the positives (TPR = true positive rate) versus the fraction of false positives out of the negatives (FPR = false positive rate), at various threshold settings. TPR is also known as sensitivity, and FPR is one minus the specificity or true negative rate.

The discrimination threshold, here Intensity Threshold ($IT_r$), is varied to determine an IT, value that tends to optimize both mean sensitivity and mean specificity. For example, an ROC Curve plotting true positive lesion pixels as a function of false positive lesion pixels will typically have a distinctive change of slope indicating an optimum $IT_r$ value.

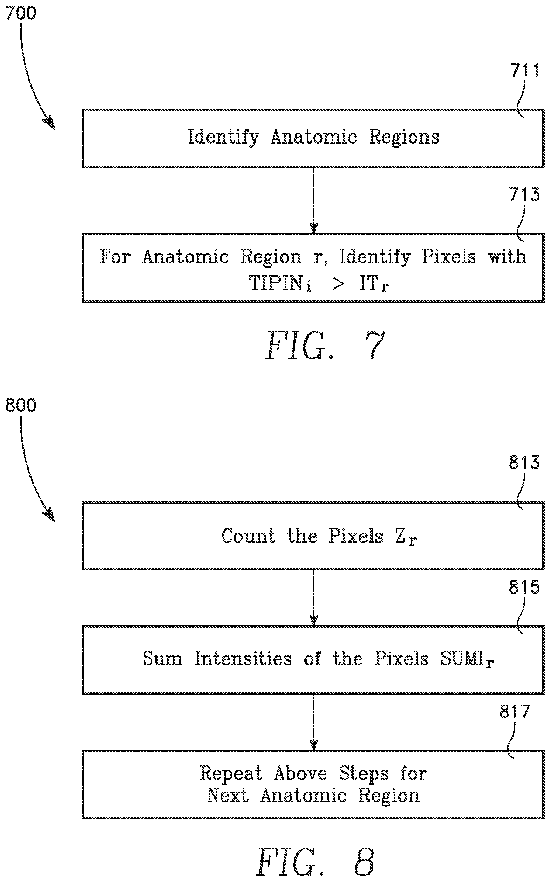

FIG. 7 shows identification of true-positive pixels indicating a lesion 700. As mentioned above, anatomic regions are identified 711. Matching pixel intensities in each test image anatomic region with a corresponding intensity thresholds $IT_r$, the following test 713 is performed

$$\text{Equation 5, Indication Of Lesions:} \qquad \text{TIPIN}_{r,I} > \text{IT}_r$$

As seen, this equation compares the normalized test image pixel intensities in a particular anatomical region with the reference image derived anatomically specific Intensity Threshold, $IT_r$. Where the test image pixel intensity is greater than the corresponding Intensity Threshold, the pixel is a true-positive pixel indicating the presence of a lesion.

Figure 8 shows evaluation of anatomically specific metrics 800. In particular, for each anatomic region the number of true-positive pixels, $Z_r$, is counted 813. In addition, the intensities of all of the true-positive pixels are summed, $SUMI_r$, in a subsequent step 815. These steps are repeated for each of the anatomic regions 817.

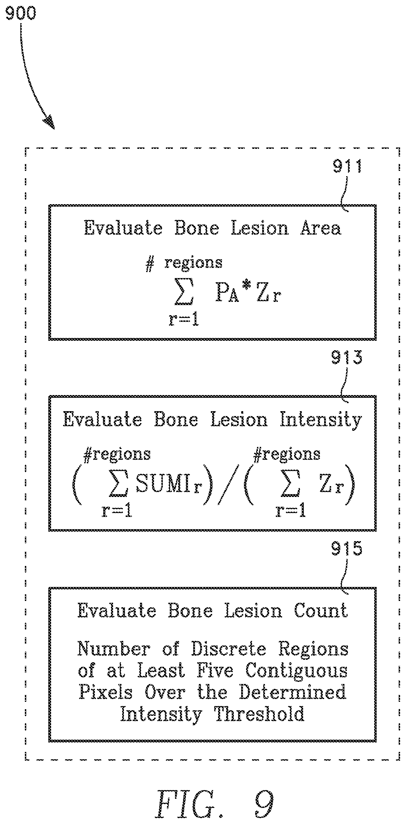

Figure 9 shows evaluation of summary metrics 900. Summary metrics include for all anatomic regions.

Summary bone lesion area 911 is evaluated as shown in Equation 6 where $P_A$ represents the area of one pixel.

Equation 6, **Summary Bone Scan Lesion** $\sum_{r=1}^{\#regions} P_A * Z_r$

Area (BSLA):

Summary bone lesion intensity 913 is evaluated as shown in Equation 7 below.

Equation 7, **Summary Bone Scan Lesion Intensity (SBLI):**

$$\left(\sum_{r=1}^{\#regions} SUMI_r\right)/\left(\sum_{r=1}^{\#regions} Z_r\right)$$

Summary bone lesion area thus represents a quantification of the size and number of active regions on the bone scan whereas the bone scan lesion intensity represents the level of bone formation activity.

In various embodiments, bone lesion count 915 is assessed. In an embodiment utilizing a lesion area identifier, lesions are identified as discrete regions including at least five contiguous pixels, each of which is over the determined intensity threshold. Lesion identifiers and the size of contiguous pixel groups in various embodiments consider not only features large enough to be of interest, but also whether there is a likelihood a group of the size selected will be simultaneously affected by common failures such as faulty scanner camera pixels.

Equation 8, **Summary Bone Scab Lesion Count (BSLC):**

Number of discrete regions of at least five contiguous pixels over the determined intensity threshold.

Changes in the lesion burden metrics between serial bone scans from a given patient may be calculated during response assessment in order to quantitatively assess the patient's response to treatment. The percent change in a lesion burden metric may be used to assess treatment progression and/or response, with cut points in the percent change delineating each response category. For instance, a bone scan image lesion area increase of 30% or greater may be considered progression, and a decrease of 30% or greater may be considered response.

In operation, steps in above described assessments may be varied to suit availability of images, data derived from images, and reference image processing steps. For example, determining anatomic region specific intensity thresholds from reference images might follow normalization of test images. In another example, multiple sets of reference images may be processed and corresponding RIMEDIAN and $TI_r$ values used with one or more test images. As such, persons of ordinary skill in the art will recognize from the present disclosure that sequences of image processing steps differing from those described above are appropriate in cases, for example the case where there is a search for an optimum set of reference images. Therefore, operation of the above described system may be varied to suit particular needs and constraints.

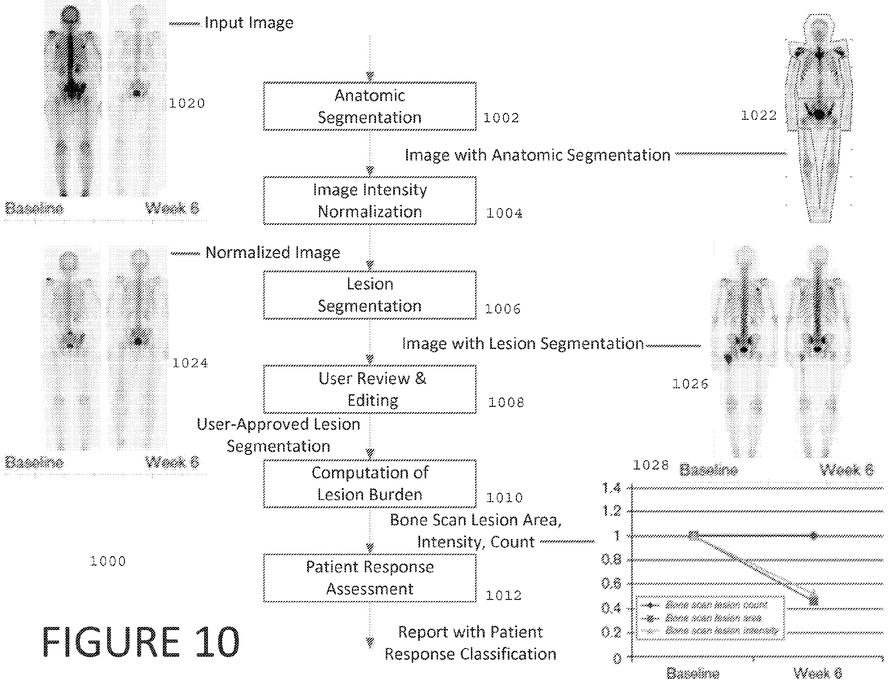

Figure 10 illustrates an exemplary assessment system operating scenario 1000. Generally, input image(s) are processed using data from reference image(s) to produce a quantitative assessment of bone disease burden. To the extent there are patient images at treatment intervals, changes in quantitative indicia of the disease are indicative of a response to the treatment, a progressing disease, or a stable disease.

As shown, patient baseline and week 6 images are available 1020. The assessment process provides the quantitative disease indicia for the baseline and for the week 6 images in generally the same manner.

Initially, anatomic segmentation is performed to segment an input image 1002. During image segmentation, the image is divided into anatomic regions. Anatomic regions selected for this example are spine, ribs, head, extremities, and pelvis. Anatomic segmentation of the input image provides a segmented image similar to the illustrated segmented image 1022.

Image intensity normalization is performed on the segmented input image 1004. Normalization produces images similar to the illustrative normalized baseline and week 6 images 1024.

Lesion segmentation or identification 1006 follows image normalization 1004. Here, intensity normalized pixels in each region of the input image are compared with intensity threshold values derived from corresponding regions of reference images as explained above. The region specific intensity threshold values derived from the reference images are indicative of lesions in the input image.

Optional user review and editing to obtain user-approved lesion segmentation 1008 and adjustments 114 shown in Figure 1 provide for human adjustments to be made to the assessment. For example, false positives due to joint disease and broken bones can be resolved here. Lesion segmentation with or without the optional user review and editing produces images similar to the illustrative baseline and week 6 lesion indicating images 1026.

Computation of lesion burden 1010 follows lesion segmentation 1006 and user review and editing 1008, if any. During this step, measures of lesion area, lesion intensity, and lesion count for specific regions and/or all regions are determined. In an embodiment, lesion area is summed for all regions and lesion intensity is summed for all regions. In various embodiments, lesion count, for example lesion count summed for all regions, together with summary values of lesion area and lesion intensity, provide means to quantify lesion burden.

In various embodiments, patient response assessment 1012 includes a patient response classification report showing for example, response or progression or stable. In an embodiment, a chart 1028 provides a quantitative comparison of baseline and week 6 measures for bone scan lesion count, bone scan lesion area, and bone scan lesion intensity.

In some embodiments, image comparisons utilize a foundation image together with a semi-transparent overlay. In an embodiment, an automatically segmented region image is presented, colorized or not, as a semi-transparent overlay on the bone scan image (original or normalized). Such may be used, *inter alia*, as an operator aid in adjusting and/or editing an image as needed 114.

In an embodiment, a foundation image, such as a baseline image with lesion segmentation 1026, together with a semi-transparent overlay of the week 6 (or a similar image from another treatment interval) image is used. Here, colors or colorization may be used to enhance the visual contrast between the "before and after" conditions. Notably, these image comparisons provide what some would see as qualitative, "at a glance" information. To the extent care is taken in preserving the detail in the original images, they also embody a quantitative measure of bone disease burden change.

While various embodiments of the present invention have been described above, it should be understood that they have been presented by way of example only, and not limitation. It will be apparent to those skilled in the art that various changes in the form and details can be made without departing from the scope of the invention. As such, the breadth and scope of the present invention should not be limited by the above-described exemplary embodiments, but should be defined only in accordance with the following claims.

**Claims**

1. An automated method for processing a subject bone scan image and quantifying bone lesion burden, the method comprising the steps of:

   providing a subject bone scan image formed from pixels;
   performing atlas-based anatomic segmentation of the image in order to identify a set of anatomic regions included on the image;
   normalizing the intensity of the image such that the intensity of normal bone in the image corresponds with that of normal bone in one or more reference bone scan images;
   detecting bone lesions in each region of the image by comparing the intensities of pixels in the region with a region specific intensity threshold derived from the one or more reference bone scan images; and,
   quantifying bone lesion burden using characteristics of a set of pixels corresponding to detected bone lesions.

2. The automated method of claim 1 further comprising the steps of:

   for the subject bone scan image, determining at least one quantitative bone lesion burden indicium from the group lesion area, lesion intensity, and lesion count;
   for a previously processed bone scan image, determining the corresponding quantitative bone lesion burden indicium; and,
   determining patient response based on a comparison of the quantitative bone lesion burden indicia.

3. The automated method of claim 2 wherein the quantitative bone lesion burden indicium is cumulative for all of the regions.

4. The automated method of claim 1 further comprising the steps of:

   for the subject bone scan image, determining at least two quantitative bone lesion burden indicia from the group lesion area, lesion intensity, and lesion count;
   for a previously processed bone scan image, determining the corresponding quantitative bone lesion burden indicia; and,
   determining patient response based on a comparison of the quantitative bone lesion burden indicia.

**5.** The automated method of claim 1 further comprising the steps of:

for the subject bone scan image, determining quantitative bone lesion burden indicia as each of lesion area, lesion intensity, and lesion count;
for a previously processed bone scan image, determining the corresponding quantitative bone lesion burden indicia; and,
determining patient response based on a comparison of the quantitative bone lesion burden indicia.

**6.** The automated method of claim 1 further comprising the step of:

selecting as a foundation image a patient baseline image that is normalized and processed to show lesions;
selecting as a semi-transparent overlay image a patient later in time image that is normalized and processed to show lesions; and,
presenting the superimposed images to a lay-person as a means for explaining how the lesion burden of a particular patient has changed.

**7.** The automated method of claim 1 further comprising the step of:

selecting as a foundation image one of a patient original image or patient normalized image;
selecting as an overlay image a semi-transparent overlay of detected lesions; and,
presenting the superimposed images as a means for visualizing the extent and distribution of lesion burden of a particular patient.

**8.** The automated method of claim 7 wherein the overlay image is an image that is contemporaneous with the foundation image.

**9.** The automated method of claim 2 further comprising the steps of:

from plural reference scans, determining a normal bone normalizing value that is not region specific;
from the subject bone scan image, determining a normal bone intensity value; and,
carrying out the normalizing step using the reference scan normal bone normalizing value and the subject bone scan image normal bone intensity.

**10.** The automated method of claim 9 further comprising the steps of:

annotating plural reference scans to indicate lesions;
classifying annotations as true-positive pixels or otherwise as true-negative pixels; and,
for each anatomical region determining an intensity threshold value tending to replicate the classification.

**11.** The automated method of any preceding claim further comprising the step of:

scanning a bony anatomical structure with a scanner to produce the subject bone scan image.

**12.** The automated method of claim 11 further comprising the steps of:

for the subject image, determining bone scan lesion area as the number of lesion pixels in all of the regions multiplied by pixel area;
for a previously processed bone scan image, determining the corresponding quantitative bone lesion burden indicium; and,
determining patient response based on a comparison of the quantitative bone lesion burden indicia.

**13.** The automated method of claim 12 further comprising the steps of:

for the subject image, determining summed intensities as the sum of the intensities of the lesion pixels in all of the regions;
for the subject image, determining summed lesion pixels as the sum of the lesion pixels in all of the regions;
determining the bone scan lesion intensity as the summed intensities divided by the summed lesion pixels;
for a previously processed bone scan image, determining the corresponding quantitative bone lesion burden indicium; and,

determining patient response based on a comparison of the quantitative bone lesion burden indicia.

14. The automated method of claim 11 further comprising the steps of:

selecting a number k of contiguous pixels unlikely to be simultaneously affected by common failures such as a faulty scanner camera pixels;

for the subject image and considering all regions, determining the number of groups j having k or more lesion pixels; and,

setting bone scan lesion count equal to j.

15. A device (100) for processing a subject bone scan image and quantifying bone lesion burden, the device comprising:

a radiotracer type scanner (102), a processor (104), and digital data memory (104);

an anatomic atlas stored in memory;

from reference scans

a normal bone indicium is derived and stored in memory and

a set of lesion indicating intensity thresholds that are region specific is derived and stored in memory;

the scanner operable to acquire a subject bone scan image formed from pixels;

the processor operable to use the anatomic atlas to anatomically segment the subject image;

the processor operable to use the normal bone indicium to normalize the intensities of pixels in the subject image;

the processor operable use the intensity thresholds to detect lesion pixels;

and,

the processor operable to calculate quantitative lesion burden metrics from lesion pixel characteristics.

## Patentansprüche

1. Automatisiertes Verfahren zum Bearbeiten eines Bildes eines gescannten Knochens eines Patienten und Quantifizieren der Knochenläsionsbelastung, wobei das Verfahren folgende Schritte umfasst:

ein aus Pixeln aufgebautes Bild von einem gescannten Knochen eines Patienten bereitstellen;

eine Atlas-basierte anatomische Segmentierung des Bildes durchführen, um auf dem Bild enthaltene anatomische Regionen zu identifizieren;

die Intensität des Bildes derart normalisieren, dass die Intensität eines normalen Knochens im Bild der Intensität eines normalen Knochens in einem oder in mehreren Referenz-Knochenscanbildern entspricht;

in den einzelnen Bildregionen Knochenläsionen erkennen, indem die PixelIntensitäten einer Region mit einem bereichsspezifischen Intensitätsschwellenwert verglichen werden, der von einem oder mehreren Referenz-Knochenscanbildern abgeleitet ist; und

Knochenläsionsbelastungen unter Verwendung von Pixel-Merkmalen quantifizieren, die erkannten Knochenläsionen entsprechen.

2. Automatisiertes Verfahren gemäß Anspruch 1, ferner umfassend folgende Schritte:

für das Bild eines gescannten Knochens eines Patienten aus dem Läsionsbereich, der Läsionsintensität und der Läsionszahl mindestens ein quantitatives Indiz für die Knochenläsionsbelastung bestimmen;

für ein zuvor bearbeitetes Knochenscanbild das entsprechende quantitative Indiz für die Knochenläsionsbelastung bestimmen; und

die Reaktion des Patienten anhand eines Vergleiches der quantitativen Knochenläsionsbelastungsindizien bestimmen.

3. Automatisiertes Verfahren gemäß Anspruch 2, wobei das quantitative Knochenläsionsbelastungsindiz für alle Regionen kumulativ ist.

4. Automatisiertes Verfahren gemäß Anspruch 1, ferner umfassend folgende Schritte:

für ein Bild eines gescannten Knochens eines Patienten aus dem Läsionsbereich, der Läsionsintensität und der Läsionszahl mindestens zwei quantitative Indizien für die Knochenläsionsbelastung bestimmen;

für ein zuvor bearbeitetes Knochenscanbild entsprechende quantitative Indizien für die Knochenläsionsbelastung bestimmen; und

die Reaktion des Patienten anhand eines Vergleiches der quantitativen Knochenläsionsbelastungsindizien bestimmen.

5. Automatisiertes Verfahren gemäß Anspruch 1, ferner umfassend folgende Schritte:

für das Bild eines gescannten Knochens eines Patienten jeweils aus dem Läsionsbereich, der Läsionsintensität und der Läsionszahl quantitative Indizien für die Knochenläsionsbelastung bestimmen;

für ein zuvor bearbeitetes Knochenscanbild entsprechende quantitative Indizien für die Knochenläsionsbelastung bestimmen; und

die Reaktion des Patienten anhand eines Vergleiches der quantitativen Knochenläsionsbelastungsindizien bestimmen.

6. Automatisiertes Verfahren gemäß Anspruch 1, ferner umfassend folgende Schritte:

ein normalisiertes, bearbeitetes und Läsionen zeigendes Baseline-Bild eines Patienten als Grundbild wählen;

ein normalisiertes, bearbeitetes und Läsionen zeigendes späteres Bild eines Patienten als halbtransparentes Überlagerungsbild wählen; und

einem Laien mit Hilfe der überlagerten Bilder erklären, wie sich die Läsionslast eines bestimmten Patienten verändert hat.

7. Automatisiertes Verfahren gemäß Anspruch 1, ferner umfassend folgende Schritte:

ein Originalbild oder ein normalisiertes Bild eines Patienten als Grundbild wählen;

das halbtransparente Überlagerungsbild von erkannten Läsionen als Überlagerungsbild wählen; und

mit Hilfe der überlagerten Bilder das Ausmaß und die Verteilung der Läsionslast bei einem bestimmten Patienten visualisieren.

8. Automatisiertes Verfahren gemäß Anspruch 7, wobei das Überlagerungsbild gleichzeitig mit dem Grundbild entstanden ist.

9. Automatisiertes Verfahren gemäß Anspruch 2, ferner umfassend folgende Schritte:

anhand von mehreren Referenz-Scans einen regionsunspezifischen normalen Knochennormalisierungswert bestimmen;

anhand des Bildes eines gescannten Knochens eines Patienten einen normalen Knochenintensitätswert bestimmen; und

mit Hilfe des normalen Knochennormalisierungswertes des Referenz-Scans und der normalen Knochenintensität des Bildes eines gescannten Knochens eines Patienten den Normalisierungsschritt durchführen.

10. Automatisiertes Verfahren gemäß Anspruch 9, ferner umfassend folgende Schritte:

mehrere Referenz-Scans kommentieren, um Läsionen anzuzeigen;

Anmerkungen als Richtig-Positiv-Pixel oder andernfalls als Richtig-Negativ-Pixel klassifizieren; und

für jeden anatomischen Bereich den Intensitätsschwellenwert bestimmen, der dazu neigt, die Klassifikation zu replizieren.

11. Automatisiertes Verfahren gemäß einem der vorhergehenden Ansprüche, ferner umfassend folgenden Schritt:

eine knöcherne anatomische Struktur mit einem Scanner scannen, um das Bild eines gescannten Knochens eines Patienten zu erzeugen.

12. Automatisiertes Verfahren gemäß Anspruch 11, ferner umfassend folgende Schritte:

für das Bild des Patienten die Knochenscanläsionsfläche bestimmen als die Anzahl der Läsionspixel aller Regionen multipliziert mit der Pixelfläche;

für ein zuvor bearbeitetes Knochenscanbild das entsprechende quantitative Indiz für die Knochenläsionsbelastung bestimmen; und

die Reaktion des Patienten anhand eines Vergleiches der quantitativen Knochenläsionsbelastungsindizien bestimmen.

**13.** Automatisiertes Verfahren gemäß Anspruch 12, ferner umfassend folgende Schritte:

für das Bild des Patienten die summierten Intensitäten bestimmen als die Summe der Intensitäten der Läsionspixel aller Regionen;

für das Bild des Patienten die summierten Läsionspixel bestimmen als die Summe der Läsionspixel aller Regionen;

die Knochenscanläsionsintensität bestimmen als die summierten Intensitäten dividiert durch die summierten Läsionspixel;

für ein zuvor bearbeitetes Knochenscanbild das entsprechende quantitative Indiz für die Knochenläsionsbelastung bestimmen; und

die Reaktion des Patienten anhand eines Vergleiches der quantitativen Knochenläsionsbelastungsindizien bestimmen.

**14.** Automatisiertes Verfahren gemäß Anspruch 11, ferner umfassend folgende Schritte:

die Anzahl k von zusammenhängenden Pixeln auswählen, bei denen gleichzeitige gemeinsame Ausfälle (beispielsweise fehlerhafte Pixel der Scanner-Kamera) unwahrscheinlich sind;

für das Bild des Patienten und unter Berücksichtigung aller Regionen die Anzahl der Gruppen j mit k oder mehr Läsionspixeln bestimmen; und

die Anzahl der Knochenscanläsionen gleich j setzen.

**15.** Vorrichtung (100) zur Bearbeitung eines Bildes eines gescannten Knochens eines Patienten und zur Quantifizierung der Knochenläsionsbelastung, wobei die Vorrichtung umfasst:

einen Radiotracer-Scanner (102), einen Prozessor (104) und einen digitalen Datenspeicher (104);

einen im Speicher gespeicherten anatomischen Atlas;

aus Referenz-Scans

wird ein normales Knochenindiz abgeleitet und im Speicher gespeichert und

Läsionen, die einen bereichsspezifischen Intensitätsschwellenwert anzeigen werden abgeleitet und im Speicher gespeichert;

der Scanner kann betrieben werden, um ein Pixelbild eines gescannten Knochens eines Patienten zu erfassen;

der Prozessor kann betrieben werden, um das Bild des Patienten mit Hilfe des anatomischen Atlas anatomisch zu segmentieren;

der Prozessor kann betrieben werden, um die Pixelintensitäten im Bild des Patienten mit Hilfe des Knochenindiz zu normalisieren;

der Prozessor kann betrieben werden, um Läsionspixel mit Hilfe der Intensitätsschwellenwerte zu erkennen; und

der Prozessor kann betrieben werden, um aus den Läsionspixeleigenschaften quantitative Läsionsbelastungsmetriken zu berechnen.

## Revendications

**1.** Un procédé automatisé de traitement d'une scintigraphie osseuse d'un sujet et de quantification de charge lésionnelle osseuse, le procédé comprenant les étapes consistant à :

fournir une scintigraphie osseuse du sujet formée à partir de pixels ;

effectuer une segmentation anatomique de l'image à partir d'un atlas afin d'identifier un ensemble de régions anatomiques incluses sur l'image ;

normaliser l'intensité de l'image de telle sorte que l'intensité de l'os normal dans l'image corresponde à celle de l'os normal dans une ou plusieurs images de référence de scintigraphie osseuse ;

détecter les lésions osseuses dans chaque région de l'image en comparant l'intensité des pixels dans la région avec un seuil d'intensité spécifique à la région dérivé d'une ou plusieurs images de référence de scintigraphie osseuse ; et,

quantifier la charge des lésions osseuses en utilisant les caractéristiques d'un ensemble de pixels correspondant aux lésions osseuses détectées.

2. Le procédé automatisé selon la revendication 1 comprenant en outre les étapes consistant à :

pour la scintigraphie osseuse du sujet, déterminer au moins un indice quantitatif de charge lésionnelle osseuse à partir de la zone de la lésion du groupe, de l'intensité de la lésion et du nombre de lésions ;
pour une scintigraphie osseuse déjà traitée, déterminer l'indice de charge osseuse quantitative correspondante ; et,
déterminer la réponse du patient sur la base d'une comparaison des indices quantitatifs de la charge lésionnelle osseuse.

3. Le procédé automatisé selon la revendication 2 dans laquelle l'indice quantitatif de charge lésionnelle osseuse est cumulatif pour toutes les régions.

4. Le procédé automatisé selon la revendication 1, comprenant en outre les étapes consistant à :

pour la scintigraphie osseuse du sujet, déterminer au moins deux indices quantitatifs de charge lésionnelle osseuse à partir de la zone de la lésion du groupe, l'intensité de la lésion et le nombre de lésions ;
pour une scintigraphie osseuse déjà traitée, déterminer les indices quantitatifs de charge lésionnelle osseuse ; et,
déterminer la réponse du patient sur la base d'une comparaison des indices quantitatifs de la charge lésionnelle osseuse.

5. Le procédé automatisé selon la revendication 1 comprenant en outre les étapes consistant à :

pour la scintigraphie osseuse du sujet, déterminer les indices quantitatifs de la charge de lésions osseuses en fonction de la surface de la lésion, de l'intensité de la lésion et du nombre de lésions ;
pour une scintigraphie osseuse déjà traitée, déterminer les indices quantitatifs correspondants de la charge osseuse ; et,
déterminer la réponse du patient sur la base d'une comparaison des indices quantitatifs de la charge lésionnelle osseuse.

6. Le procédé automatisé selon la revendication 1 comprenant en outre l'étape consistant à :

sélectionner comme image de base une image de base du patient qui est normalisée et traitée pour montrer les lésions ;
sélectionner comme image de recouvrement semi-transparente une image du patient plus tard dans le temps qui est normalisée et traitée pour montrer les lésions ; et,
présenter les images superposées à un profane comme un moyen d'expliquer comment la charge lésionnelle d'un patient particulier a changé.

7. Le procédé automatisé selon la revendication 1, comprenant en outre l'étape consistant à :

sélectionner comme image de base l'une d'une image originale d'un patient ou d'une image normalisée d'un patient ;
sélectionner comme une image de recouvrement un recouvrement semi-transparent des lésions détectées et,
présenter les images superposées comme un moyen de visualiser l'étendue de l'image et la répartition de la charge lésionnelle d'un patient particulier.

8. Le procédé automatisé selon la revendication 7, dans lequel l'image de recouvrement est une image qui est contemporaine de l'image de base.

9. Le procédé automatisé selon la revendication 2 comprenant en outre les étapes consistant à :

à partir de plusieurs scanners de référence, déterminer une valeur normale de normalisation osseuse qui n'est pas spécifique à une région ;
à partir de la scintigraphie osseuse du sujet, déterminer une valeur d'intensité osseuse normale ; et,
réaliser l'étape de normalisation à l'aide de la valeur de normalisation osseuse normale du scanner de référence et l'intensité osseuse normale de scintigraphie osseuse du sujet.

**10.** Le procédé automatisé selon la revendication 9 comprenant en outre les étapes consistant à :

annoter des scans de référence pluriels pour indiquer des lésions ;
classer les annotations comme vrais pixels positifs ou autrement comme vrais pixels négatifs ; et,
pour chaque région anatomique, déterminer une valeur seuil d'intensité tendant à reproduire la classification.

**11.** Le procédé automatisé selon l'une quelconque des revendications précédentes comprenant en outre l'étape consistant à :

scanner une structure anatomique osseuse à l'aide d'un scanner pour produire la scintigraphie osseuse du sujet.

**12.** Le procédé automatisé selon la revendication 11 comprenant en outre les étapes consistant à :

pour l'image du sujet, déterminer la zone de lésion de la scintigraphie osseuse comme le nombre de pixels de lésion dans toutes les régions multiplié par la zone de pixels ;
pour une scintigraphie osseuse déjà traitée, déterminer l'indice de charge osseuse quantitative correspondante ; et,
déterminer la réponse du patient sur la base d'une comparaison des indices quantitatifs de la charge lésionnelle osseuse.

**13.** Le procédé automatisé selon la revendication 12 comprenant en outre les étapes consistant à :

pour l'image du sujet, déterminer les intensités sommées comme étant la somme des intensités des pixels de la lésion dans toutes les régions ;
pour l'image du sujet, déterminer la somme des pixels de la lésion comme la somme des pixels de la lésion dans toutes les régions ;
déterminer l'intensité de la lésion de la scintigraphie osseuse comme la somme des intensités divisée par la somme des pixels de la lésion ;
pour une scintigraphie osseuse déjà traitée, déterminer l'indice de charge osseuse quantitative correspondante ; et,
déterminer la réponse du patient sur la base d'une comparaison des indices quantitatifs de la charge lésionnelle osseuse.

**14.** Le procédé automatisé selon la revendication 11 comprenant en outre les étapes consistant à :

sélectionner un nombre k de pixels contigus peu probables d'être simultanément affectés par des défaillances courantes telles qu'une caméra de scintigraphie à pixels défectueuse ;
pour l'image du sujet et en considérant toutes les régions, déterminer le nombre de groupes j ayant k pixels de lésion ou plus ; et,
fixer le nombre de lésions de scintigraphie osseuse égale à j.

**15.** Un dispositif (100) pour traiter une scintigraphie osseuse d'un sujet et quantifier la charge de lésions osseuses, le dispositif comprenant :

un scanner de type radiotraceur (102), un processeur (104) et une mémoire de données numériques (104) ;
un atlas anatomique stocké en mémoire ; à partir de scans de référence un indice osseux normal est dérivé et stocké en mémoire ; et
un ensemble de lésions indiquant des seuils d'intensité spécifiques à une région est dérivé et stocké en mémoire ;
le scanner servant à acquérir une scintigraphie osseuse du sujet formée à partir de pixels ;
le processeur servant à utiliser l'atlas anatomique afin de segmenter anatomiquement l'élément l'image du sujet ;
le processeur servant à utiliser l'indice osseux normal pour normaliser l'intensité des pixels dans l'image du sujet ;
le processeur servant à utiliser les seuils d'intensité pour détecter les pixels de lésion ; et,
le processeur servant à calculer des mesures quantitatives de la charge lésionnelle à partir des caractéristiques des pixels de la lésion.

100

104

Reference

102

108

106

Image
Acquisition
Equipment

Processing

User
Input

109

114

Adjustment

115

111

112

Visualization
Aids

110

Visualization
Equipment

*FIG. 1*

200

Acquire Reference Images and:
1) Determine Normal Bone
Normalization Value
2) Determine Lesion Indicating
Intensity Thresholds
— 202

Acquire Test Image and Normalize — 204

Identify Lesions and Evaluate Metrics — 206

Continue
with
Another Test
Image
? — 208

Yes

No

End — 210

FIG. 2

202

302
Acquire Reference Images

400
Determine Normal Bone
Normalizing Value
RIMEDIAN
from Reference Images

500,600
Determine Anatomic
Region Specific Intensity
Thresholds IT
from Reference Images

204

304
Acquire Test Image

314
Determine Test Image
Normal Bone Intensity
Value TI75

324
Normalize Test Image
Pixel Intensity
$NF = RIMEDIAN/TI75$
$TIPIN_i = TIPI_i * NF$

206

700
Identify Lesions

800
Evaluate Metrics for
Each Anatomic Region

900
Evaluate Summary Metrics
for all Anatomic Regions

338
Continue
with
Another Test
Image
?

Yes

No

348
End

300

*FIG. 3*

400

411

Identify Anatomic Region

413

Anatomically Segment the
Reference Set of Bone Images

415

For the Extremeties Region
of Each Image, Identify as
Normal Bone the 75$^{th}$
Centile $RI75_i$ from the
Corresponding Intensity Histogram

417

From the Set of Reference
Normal Bone Intensities, Select
the Median Value RIMEDIAN

FIG. 4

500

511

Expert Locates Lesions
on Reference Images

513

Expert Indications are Used to Determine
an Intensity Threshold Indicating a Lesion

*FIG. 5*

600

611

Expert Manually Annotates Each Reference
Image to Identify Lesions

613

Classify Expert Markings as True-Positive
Pixels, Other Bone Pixels are True-Negative

615

For Each Anatomical Region, Determine
an Intensity Threshold Value $IT_r$ Tending
to Replicate the Classification

*FIG. 6*

700

711

Identify Anatomic Regions

713

For Anatomic Region r, Identify Pixels with $TIPIN_i > IT_r$

*FIG. 7*

800

813

Count the Pixels $Z_r$

815

Sum Intensities of the Pixels $SUMI_r$

817

Repeat Above Steps for Next Anatomic Region

*FIG. 8*

900

911

Evaluate Bone Lesion Area

$$\sum_{r=1}^{\# \text{ regions}} P_A * Z_r$$

913

Evaluate Bone Lesion Intensity

$$\left( \sum_{r=1}^{\#\text{regions}} SUMI_r \right) \Big/ \left( \sum_{r=1}^{\#\text{regions}} Z_r \right)$$

915

Evaluate Bone Lesion Count

Number of Discrete Regions of at Least Five Contiguous Pixels Over the Determined Intensity Threshold

*FIG. 9*

FIGURE 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **ERDI YE ; HUMM JL ; IMBRIACO M ; YEUNG H ; LARSON SM.** Quantitative bone metastases analysis based on image segmentation. *J Nucl Med,* 1997, vol. 38, 1401-1406
- **YIN TK ; CHIU NT.** A computer-aided diagnosis for locating abnormalities in bone scintigraphy by a fuzzy system with a three-step minimization approach. *IEEE Trans Med Imaging,* 2004, vol. 23, 639-654
- **SADIK M ; JAKOBSSON D ; OLOFSSON F ; OHLSSON M ; SUURKULA M ; EDENBRANDT L.** A new computer-based decision-support system for the interpretation of bone scans. *Nucl Med Commun,* 2006, vol. 27, 417-423
- **JEONG CB ; KIM KG ; KIM TS ; KIM SK.** Comparison of image enhancement methods for the effective diagnosis in successive whole-body bone scans. *J Digit Imaging,* 2011, vol. 24, 424-436
- **IMBRIACO M ; LARSON SM ; YEUNG HW ; MAW-LAWI OR ; ERDI Y ; VENKATRAMAN ES et al.** A new parameter for measuring metastatic bone involvement by prostate cancer: the Bone Scan Index. *Clin Cancer Res,* 1998, vol. 4, 1765-1772
- **NOGUCHI M ; KIKUCHI H ; ISHIBASHI M ; NODA S.** Percentage of the positive area of bone metastasis is an independent predictor of disease death in advanced prostate cancer. *Br J Cancer,* 2003, vol. 88, 195-201
- **YAHARA J ; NOGUCHI M ; NODA S.** Quantitative evaluation of bone metastases in patients with advanced prostate cancer during systemic treatment. *BJU Int,* 2003, vol. 92, 379-384
- **MORRIS MJ ; JIA X ; LARSON SM ; KELLY A ; MEZHERITZKY I ; STEPHENSON RD et al.** Post-treatment serial bone scan index (BSI) as an outcome measure predicting survival. *Presented at: Genitourinary Cancers Symposium,* 2008
- **OHLSSON et al.** Automated decision support for bone scintigraphy. *Computer-Based Medical Systems,* 2009